# EUROPEAN PATENT APPLICATION

(11) **EP 2 436 979 A1**
(43) Date of publication of application: **04.04.2012**
(21) Application number: 10184357.1
(22) Date of filing: 30.09.2010
(51) Int. Cl.: F23K 5/12, F23R 3/14, F23R 3/28, F23R 3/34

(54) **Burner for a gas turbine**

(71) Applicant: SIEMENS AKTIENGESELLSCHAFT, 80333 München (DE)
(72) Inventor: Karlsson, Andreas, 602 26 Norrköping (SE); Milosavljevic, Vladimir, 60226 Norrköping (SE); Persson, Magnus, 60226 Norrköping (SE)

(57) **Abstract**

The invention relates to a burner (1) for a gas turbine, comprising a pilot combustor (5), a supply module providing pilot fuel (20) and pilot air (21) into a pilot combustion room (23) being enclosed by a pilot burner housing (22) comprising a tapered exit throat (24) discharging a concentration of radicals and heat generated in a pilot combustion zone (25) into a main combustion room (15) enclosed by a burner housing (4). Further said burner (1) comprises an equalizer (6), which is provided with a plurality of holes through which a main flow of air (7) enters a cavity (8), wherein said burner further comprises a fuel injector (9) downstream the equalizer (6) to supply a main flow of fuel (12) into the main flow of air (7), wherein a burner axis (3) is defined by the center of the pilot combustion zone (23) and the center of the main combustion zone (14), wherein said burner further comprises a swirler (13) downstream the injector (9) to give a designated flow distribution to the flow of fuel (12) and air (7) entering downstream said main combustion room (15). To mainly reduce space requirement the equalizer (6) is built in such a manner that the main air (7) flow enters the cavity (8) in a basically radial direction with regard to the burner axis (3), wherein a channel leads from the equalizer (6) to the swirler (13) arranged circumferentially around the pilot burner housing (22), said channel and said swirler being built in such a way that the main air flow (7) from said equalizer is directed in a basically axial and circumferential direction.

## Description

The present invention relates to a burner for a gas turbine, comprising a pilot combustor comprising a supply module providing pilot fuel and pilot air into a pilot combustion zone located in a pilot combustion room being enclosed by a pilot burner housing comprising a tapered exit discharging a concentration of radicals and heat generated in the pilot combustion zone into a main combustion room enclosed by a burner housing, wherein said burner further comprises an equalizer, which is provided with a plurality of holes through which a main flow of air enters a cavity under pressure loss to equalize the flow distribution of the air in the cavity, said burner further comprising a fuel injection downstream the equalizer to supply a main flow of fuel into the main flow of air, wherein a burner axis is defined by the center of the pilot combustion zone and the center of the main combustion zone.

Gas turbine engines are employed in a variety of applications including electric power generation, military and commercial aviation, pipeline transmission and marine transportation. The preferred mode of operation of a gas turbine according to the invention is a lean partially premixed combustion process (LPP), wherein the combustion is maintained stabilized by a pilot combustor providing combustion products - radicals and heat - stabilizing a main lean partially premixed combustion process. Next to thermal efficiency the major problems associated with the combustion process in gas turbine engines are flame stabilization, elimination of pulsations and noise and the control of polluting emissions, especially nitro-oxides, carbon-monoxides, unburned hydro carbons (UHC), smoke and particle emission.

A burner of the incipiently mentioned type is described in WO 2009/121777 A1, wherein the LLP combustion is mentioned as a possibility to reduce NOx emissions due to its lowered flame temperature from conventionally approximately 2300 K to less than 1800 K below the stochiometric point. To reduce the flame temperature below 1800 K approximately twice the amount of air as for stochiometric combustion is required, which can lead to a lean extinction of the premixed flame. While the extinction problem generates vibrations of lower frequency, higher frequencies are generated by fluctuations in flame speed and the statistical movements of the flame front, which is as well undesired.

A further approach to reduce flame temperature is the addition of water, which - given in liquid state - would cool the flame temperature due to the evaporation. This however requires significant modifications in the construction of the burners since the mixing of the fuel and the water - both in liquid state - is very complicated and requires space for an additional mixing module. The current conventional burner design however is already a very packed construction without the potential for additional modules. Since the mixing of fuel and water results in a liquid emulsion, which remains unstable, the mixing module needs to be very close to the burner to avoid separation of the two mixed components.

It is therefore one object of the invention to make the design more space efficient, especially to enable the addition of further modules especially mixing modules for generating an emulsion of fuel and water.

It is a further object of the invention to improve stability and to avoid low frequency and high frequency vibrations in the burner.

It is still a further object of the invention to decrease emissions especially NOx, Co and UHC.

The invention proposes a burner of the incipiently mentioned type comprising the features of the characterizing portion of claim 1. The dependent claims deal with preferred embodiments, wherein next to the explicit references of the dependent claims possible and reasonable combinations for person with ordinary skill in the art belong to the scope of the invention.

A basic feature of the invention is that the airflow enters the cavity in a basically radial direction and then the flow direction changes by approximately 90° to enter the swirler along a basically axial flow direction guided by the walls of the cavity limiting the freedom to move radially. In the swirler the flow is given a further circumferential velocity component by swirler wings to obtain an optimal velocity distribution in the downstream main combustion chamber. Conventional swirlers of gas turbines - as shown in the above mentioned WO 2009/121777 - use a radial flow direction along the swirler, which goes along with the disadvantage of radial space consumption. Surprisingly it was recognized that the different flow direction according to the invention along the swirler does not have any negative effect on the swirl-distribution in the velocity profile of the flow entering the downstream main combustion zone. It has to be noted that with regard to continuity the axial orientation of the flow through the swirler makes a fundamental difference since the different cross section along the swirler flowpath does not accelerate the flow in the same way as previously. On the other hand the diameter of the equalizer and swirler is reduced, which makes the introduction of liquid fuel at a point closer to the upstream end of the main flame front easier. When the fuel injector is located in front of the swirler - which is most often the case - the mixing distance can be greater at the same swirl level without further radial space requirement. Also the flow equalizer can be designed most sufficiently without limiting boundary conditions with regard to space limitations.

A preferred embodiment is given by said burner comprising a swirler downstream the injector to give a designated flow distribution to the flow of fuel and air entering downstream said main combustion room. Alternatively the order of swirler and injector can be changed or the injector can be combined with the swirler, for example by providing the swirler vanes with injection holes. According to the invention the swirler can be designed nearly without any compromise regarding to space limitations since axial space is available sufficiently. All requirements can be considered to give the flow the optimal swirl distribution for best stability, lowest pressure loss and best mixing resulting in high efficiency.

A further preferred embodiment is given by the equalizer being basically a perforated plate, which plate extends with regard to a radial plane essentially axial. According to the invention also the equalizer does not suffer from any space limitation since the axial orientation of the perforated plate makes sufficient space available for an optimized design with regard to the equalizing effect and the pressure loss. Having a cylindrical burner the perforated plate results in a perforated cylinder having a longitudinal cylinder axially coinciding with the burner axis defined by the center of the pilot combustion zone and the center of the main combustion zone.

Still another preferred embodiment is given by said burner comprising an annular converging channel downstream the swirler and discharging into the main combustion room. The converging channel with the upstream located swirler supports a beneficial flow distribution in the combustion room stabilizing a stagnation point near the exit of the pilot burner housing, where a concentration of radicals and heat are discharged into the main combustion zone.

With further advantage at least one of the elements said equalizer, said cavity, said swirler and said converging channel enclose the pilot burner at least partially annularly. This compact design enables a radial concentration of all functional components on the one hand and on the other hand gives way to an optimized design with enabling best mixing, swirl distribution and velocity profile of the flow entering the main combustion zone.

Highly beneficial is the use of the invention to enable the addition of water into a liquid fuel to be mixed with the airflow by means of the injector. A mixing module can be provided upstream the injector module with regard to the fuel supply, wherein water is mixed with liquid fuel to be injected into the air flow entering the swirler. The radial concentration gives further space required for the mixing module which has to be close to the injector to avoid a decomposition of the emulsion, which is by nature unstable. The reduced diameter of the conventional components of the burner according to the invention enables a comparable reduced space requirement of a burner incorporating a mixing module generating the unstable emulsion without further space requirement in the radial direction. This enables a retrofit of a conventional gas turbine up to the technology of burning a fuel water emulsion.

The burner according to the invention is preferably used in a gas turbine being operated with more than one burner preferable to be distributed along the circumference of the machine axis.

The above mentioned attributes and other features and advantages of this invention and the manner of attaining them will become more apparent and the invention itself will be better understood by reference to the following description of the currently best mode of carrying out the invention taken in conjunction with the accompanying drawing, wherein:
- Figure 1: schematically shows a three dimensional longitudinal section through a burner according to the present invention.
- Figure 2: schematically shows a three dimensional longitudinal section through an axial channel according to figure 1, wherein a gaseous fuel injection lance is provide in the axial channel,
- Figure 3: schematically depicts a fuel injection lance according to figure 2 enlarged in longitudinal perspective,
- Figure 4: schematically depicts a fuel injection lance according to figure 2 enlarged in frontal perspective,
- Figure 5: schematically depicts a beneficial geometry of the tapered annular channel between the swirler and the main combustion chamber,

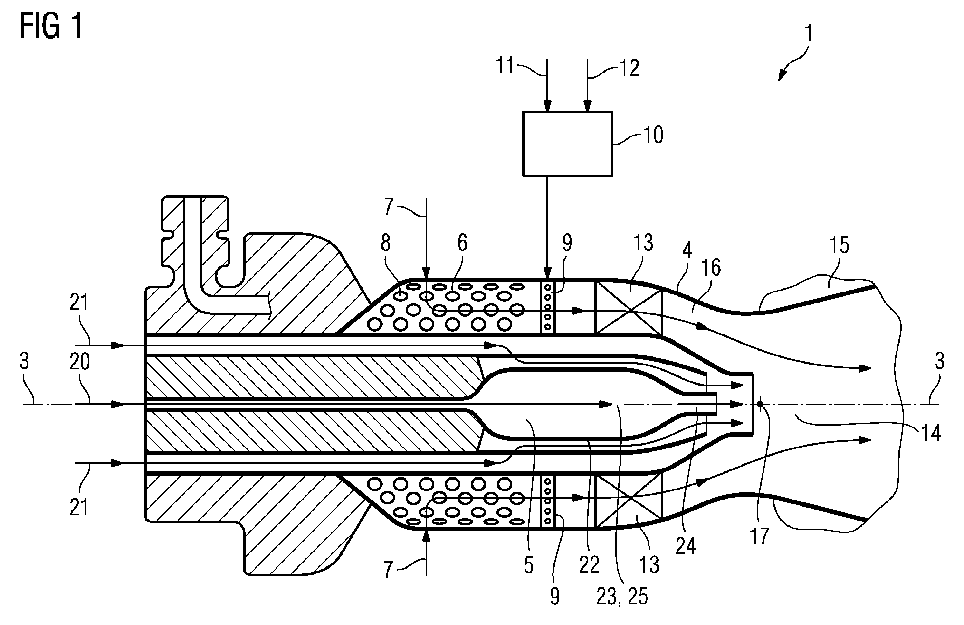

The figure 1 shows a longitudinal section through a burner 1 according to the present invention. The burner 1 is a burner 1 of a gas turbine, of which a machine axis 2 can be parallel or inclined to a burner axis 3. The machine axis 2 is defined by rotational axis of a gas turbine rotor. The burner axis 3 is defined by a center of a pilot combustion zone and a center of a main combustion zone.

The gas turbine comprises more than one burner 1 arranged along a circumference of the machine axis 2, of which only one is shown. The burner 1 comprises a burner housing 4 and a pilot burner 5. The burner housing 4 is basically a metal shell, wherein a part of the shell is perforated. The perforation functions as an equalizer 6 equalizing a flow of air 7 entering a cavity 8 enclosed by the burner housing 4. The air flow 7 in the cavity 8 is enriched by an emulsion of fuel and water, which is injected into the flow by means of an injector 9, which injects the emulsion into the gas flow perpendicular or inclined to the main gas flow direction. The injector 9 is basically a tube extending radially with regard to the burner axis 3 provided with holes respectively nozzles along its radial extension. The inner of the tube of the injector 9 is supplied with the emulsion from a mixing module 10 provided with water 11 and liquid fuel 12. Downstream the injector 9 a swirler 13 gives the flow a designated swirl to obtain the desired velocity distribution in the downstream main combustion zone 14. The swirler 13 comprises several vanes distributed circumferentially around the burner axis 3. Downstream the swirler 13 an annular converging channel 16 leads the flow into the combustion room 15 to a forward stagnation point 17 of the combustion zone 14.

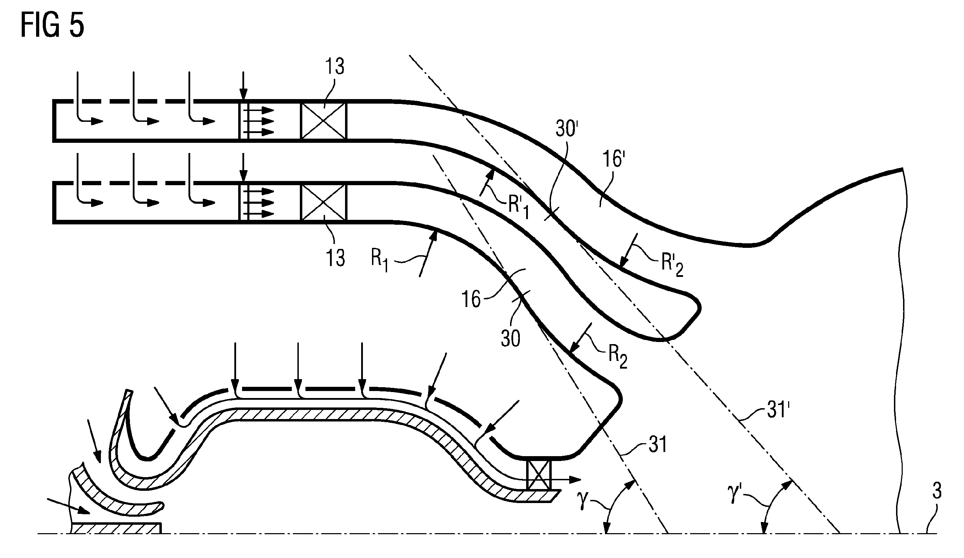

Figure 5 shows a beneficial geometry of the converging channel 16 downstream the swirler 13 and downstream the fuel injector 9 tubes. In figure 5 two of the converging channels 16 are depicted, which can be a deliberate number according to the needs of the burner with regard to fuel and air consumption. The channel between the swirler 13 and the main combustion zone 14 transporting a mixture of fuel and air is of a smooth S-shape provided with a first radius R1 on the inner wall of the converging annual channel 16 giving the channel wall a convex shape and provided with a downstream second radius R2 on the inner wall giving it a concave shape. The two radii R1, R2 meet each are the at the location of the highest tapering respectively incline of the channel 16 with regard to the burner axis 3, which point is referred to by reference number 30 in figure 5. The tangent touching the point 40 and intersecting the burner axis 3 has an angle γ with the burner axis 3, which is below 25°. The annular converging channel 16' is provided with similar radii R1', R2' and point 30' resulting in tangent 31' enclosing an angle γ'<25° with the burner axis 3. This channel's 16 geometry leads to a decrease in pressure loss and the smooth permanently curved contour without any straight portions avoids flow separation, which improves stability and reduces the likeliness of flashbacks.

The pilot burner 5 is supplied with pilot fuel 20 and pilot air 21. The pilot burner 5 comprises its own burner housing 22 and its own combustion zone 23, wherein the pilot burner housing 22 is tapered at a downstream end and discharges heat and free radials through a throat exit into the main combustion zone 14. The throat exit narrows the flow channel for the gas exiting the pilot burner 5, which leads to an acceleration of the discharged gas and decreases the likelihood of flashbacks from the main combustion room 16 into the pilot burner 5. In the main combustion room 15 a recirculation is established, mixing the heat and the free radicals generated by the pilot burner 5 with combustion products of the main combustion and with the flow discharged by the converging channel 16.

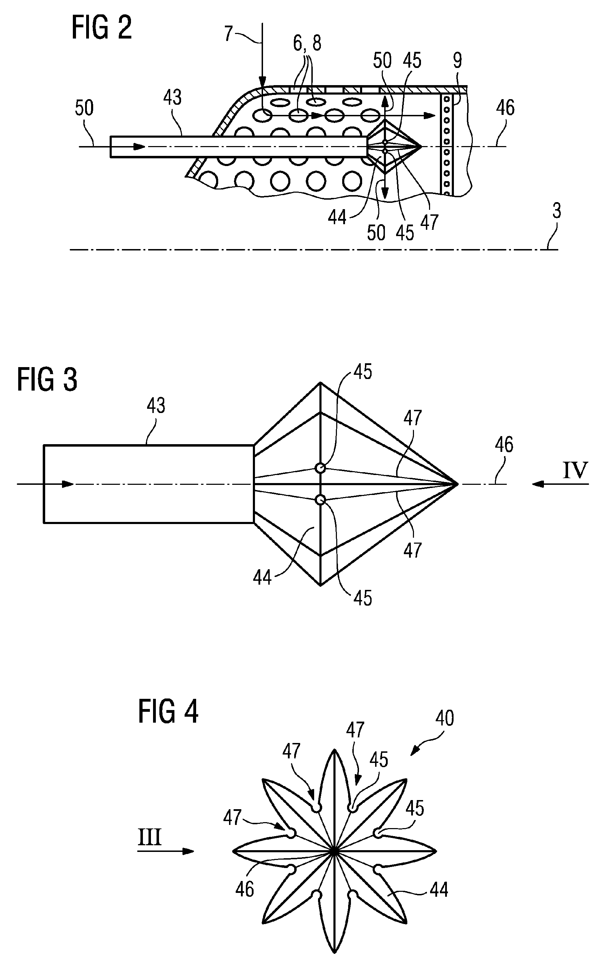

To increase fuel flexibility - in other words - to provide the possibility to inject fuel of the varying quality and/or quantity at different positions in the burner with improved mixing it is beneficial to provide the cavity 8 downstream the equalizer 6 and/or downstream the channel leading fluid from the equalizer 6 to the swirler 13 with a fuel injection lance 40 extending basically parallel to the burner axis 3 respectively extending parallel or like an angle bisector between the limiting walls of the equalizer 6 respectively the cavity 8. The essential parameter about the longitudinal extension of the lance 40 is that it extends along the main flow direction of the surrounding gas flow. This fuel injection lance 40 provides preferably gaseous fuel 50 into the flow of air downstream the equalizer 6 and upstream the swirler 13. Preferably the fuel 50 injection lance 40 is located upstream the injector 9, which is provided to inject liquid fuel (11+12). The fuel injection lance 40 is depicted in closer detail in figures 3 and 4 showing a longitudinal perspective and a frontal view indicated in the figures 3 and 4 by roman numbers according to the figure number. The injector lance 40 is provided with an enlarged tip portion 44 at the end of a basically cylindrical lance body 43. Through the lance body 43 the gaseous fuel 50 is conducted through a non depicted inner channel into the enlarged tip portion 44, where a plurality of orifices 45 are provided to inject the gaseous fuel 50 into the main flow 7. The tip portion is provided with a plurality of grooves 47 extending in axial direction of the lance 40 along a central axis 46 of the lance. The grooves 47 are of V- shape respectively and the orifices 45 are provided in the radially most inner point of the grooves respectively - in other words - at the bottom of the respective groove. The enlarged tip 44 is shaped in such a way that a frontal axial (with regard to the longitudinal dimension of the lance 40) view looks like a star with the orifices 45 in the bottom of the recesses of the star-shape. Preferably the orifices 45 are located at the axial position of largest diameter - respectively the enlarged tip portion 44. The benefit of the described geometry is the improved mixing due to the location of the orifices 45 at starting points of vortices of the flow guided along the grooves 47. The vortices or eddy currents starting in the recesses of this star-shape result in a highly turbulent flow which improves the mixing of the main flow with the gaseous fuel 50.

## Claims

1. Burner (1) for a gas turbine, comprising
- a pilot combustor (5) comprising a supply module providing pilot fuel (20) and pilot air (21) into a pilot combustion room (23) being enclosed by a pilot burner housing (22) comprising a tapered exit throat (24) discharging a concentration of radicals and heat generated in a pilot combustion zone (25) into a main combustion room (15) enclosed by a burner housing (4),
- wherein said burner (1) further comprises an equalizer (6), which is provided with a plurality of holes through which a main flow of air (7) enters a cavity (8) under pressure loss to equalize the flow distribution of the air (7) in the cavity (8),
- wherein said burner further comprising a fuel injector (9) downstream the equalizer (6) to supply a main flow of fuel (12) into the main flow of air (7),
- wherein a burner axis (3) is defined by the center of the pilot combustion zone (23) and the center of the main combustion zone (14),
- wherein said burner further comprises a swirler (13) downstream the injector (9) to give a designated flow distribution to the flow of fuel (12) and air (7) entering downstream said main combustion room (15),
**characterized in that**
the equalizer (6) extends basically cylindrically and axially along the burner axis that the main air (7) flow enters the cavity (8) in a basically radial direction with regard to the burner axis (3),
wherein a channel leads from the equalizer (6) to the swirler (13) arranged circumferentially around the pilot burner housing (22), said channel and said swirler being built in such a way that the main air flow (7) from said equalizer is directed in a basically axial and circumferential direction.

2. Burner (1) according to claim 1,
wherein the equalizer (6) comprises a perforated plate provided with said holes, which plate extends basically concentrically around the burner axis (3).

3. Burner (1) according to claim 1,
wherein a converging annular channel (16) is provided downstream the swirler (13) to discharge the flow into the main combustion room (14).

4. Burner (1) according to at least claim 1 and 3,
wherein at least one the elements, said equalizer (6), said cavity (8), said swirler (13) and said converging channel (16) enclose the pilot combustor (5) at least partially annually.

5. Burner (1) according to at least claim 1,
wherein a mixing module (10) is provided upstream the injector (9) with regard to the fuel supply, wherein
water (11) is mixed with liquid fuel (12) to be injected into the air flow (7) entering the swirler (13).

6. Gas turbine comprising more than one burner (1) according to at least one of the claims 1 to 5.
